# EUROPEAN PATENT SPECIFICATION

(11) **EP 3 258 093 B1**
(45) Date of publication and mention of the grant of the patent: **03.04.2019**
(21) Application number: 17175091.2
(22) Date of filing: 08.06.2017
(51) Int. Cl.: F02D 41/40, F02D 41/02, F02D 41/00

(54) **METHOD OF CONTROLLING OPERATION OF AN EXHAUST GAS TREATMENT APPARATUS**
VERFAHREN ZUR REGELUNG DES BETRIEBS EINER ABGASBEHANDLUNGSVORRICHTUNG
PROCÉDÉ DE COMMANDE DE FONCTIONNEMENT D'UN APPAREIL DE TRAITEMENT DE GAZ D'ÉCHAPPEMENT

(30) Priority: 17.06.2016 GB 201610662
(43) Date of publication of application: 20.12.2017
(73) Proprietor: Caterpillar Inc., Peoria, IL 61629 (US)
(72) Inventor: EAGER, Antony, Peterborough, Cambridgeshire PE3 6LJ (GB); GODFREY, Nathan, Peterborough, Cambridgeshire PE4 7GN (GB)
(74) Representative: BRP Renaud & Partner mbB Rechtsanwälte Patentanwälte Steuerberater

(56) References cited:
- EP-A1- 1 387 071
- EP-A2- 1 245 814
- US-A1- 2005 241 299

## Description

### Technical Field

The disclosure relates to the field of exhaust gas treatment and, in particular, to controlling operation of an exhaust gas treatment apparatus.

### Background

An exhaust gas treatment apparatus may comprise a plurality of modules, wherein each module is intended to treat one or more constituents of an exhaust gas. The modules may be arranged in series such that exhaust gas flows through each module in sequence. In order to operate as intended, some modules may require the exhaust gas to exceed a particular temperature.

An exhaust gas treatment apparatus may comprise a diesel oxidation catalyst module, a diesel particulate filter module downstream of the diesel oxidation catalyst module and a selective catalytic reduction module, downstream of the diesel particulate filter module. One or more of these modules may not operate as intended when the exhaust gas is below a certain temperature. Moreover, increased temperature may improve operation and efficiency of the exhaust gas treatment apparatus. Moreover, periodic increases in temperature may be beneficial for facilitating reactions in the exhaust gas treatment apparatus that result in removal of deposits to thereby clean the exhaust gas treatment apparatus. For example, periodic increases in temperature may result in burning of soot deposits that may have built up since a previous increase in temperature.

In order to increase the temperature of the exhaust gas, it is known to use the diesel oxidation catalyst module to increase the temperature of the exhaust gas passing through it in order to increase the temperature of exhaust gas arriving downstream of the diesel oxidation catalyst. This may be achieved by introducing unburnt fuel upstream of the diesel oxidation catalyst for oxidation in the diesel oxidation catalyst thereby to increase the temperature of the exhaust gas leaving the diesel oxidation catalyst module.

Accordingly, in addition to injection of fuel for combustion, fuel may be injected into one or more of the cylinders as a post combustion event with the intention that the fuel passes out of the one or more cylinders without oxidising. This fuel may oxidise in the diesel oxidation catalyst module and thereby increase temperature of exhaust gas therein.

There may be further reasons why it may be desirable to increase temperature of exhaust gas in the exhaust gas treatment apparatus. These reasons may include burning deposits of urea that may otherwise build on interior surfaces of the exhaust gas treatment apparatus and also increasing the temperature of exhaust gas arriving at the selective catalytic reduction module which may increase efficiency and reliability of operation.

EP1387071 discloses a method wherein three modes for heating an exhaust gas purification apparatus wherein post-injection amount increases when temperature to be reached is higher.

EP1245814 discloses a system which controls the oxygen concentration of exhaust gas when an exhaust treatment module is regenerated. The regeneration of a particulate filter is enabled through post-injections and is completed within a short period of time.

### Summary of the disclosure

Against this background there is provided the engine comprising:
a combustion unit having an exhaust conduit and one or more combustion cylinders each having a piston, a fuel injector, an intake valve and an exhaust valve leading to the exhaust conduit;
an exhaust gas recirculation path between the exhaust conduit and upstream of the intake valve, the exhaust gas recirculation path having an exhaust gas recirculation valve to open and close the exhaust gas recirculation path;
an exhaust gas treatment apparatus configured to receive fluid from the exhaust conduit and comprising a first module and a second module downstream of the first module;
the method comprising a first mode for increasing a temperature of exhaust gas in the exhaust gas treatment apparatus to a first temperature, T₁, and a second mode for increasing temperature of exhaust gas in the exhaust gas treatment apparatus to a second temperature, T₂, wherein T₁, > T₂;
the method comprising, in both the first and second modes, injecting fuel from the fuel injector into each of the one or more combustion cylinders in a main injection event to initiate a primary combustion event that drives the piston;
the first mode having a first mode duration, the first mode comprising: closing the exhaust gas recirculation valve; and periodically injecting fuel at a first rate of injection from the fuel injector into one of the one or more combustion cylinders in a first mode subsidiary injection event after the main injection event during a period in which the fuel injected in the first mode subsidiary injection event passes into the first module without combusting in the combustion unit for raising temperature of exhaust gas in the exhaust gas treatment apparatus by combustion therein, wherein a delay is invoked after execution of the first mode before a subsequent execution of the first mode, the delay having a delay duration of at least 50 times the first mode duration;
the second mode having a second mode duration shorter than the first mode duration, the second mode comprising: periodically injecting fuel at a second rate of injection, wherein the second rate of injection is lower than the first rate of injection, from the fuel injector into one of the one or more combustion cylinders in a second mode subsidiary injection event after the main injection event during a period in which the fuel injected in the second mode subsidiary injection event passes into the first module without combusting in the combustion unit for raising temperature of exhaust gas in the exhaust gas treatment apparatus by combustion therein;
the method comprising invoking the first mode when targeting the first temperature, T₁, and invoking the second mode when targeting the second temperature, T₂.

### Brief description of the drawings

Figure 1 shows an exhaust gas treatment apparatus of an engine that may be controlled by the method of the present disclosure;
Figure 2 shows a graph of nominal regeneration rate against temperature for assisting in understanding the context of the present disclosure; and
Figure 3 shows a graph of nominal regeneration rate against temperature for assisting in understanding the context of the present disclosure.

### Detailed description

The disclosure relates to a method of controlling an engine having an exhaust gas treatment apparatus.

For understanding the context of the method of the disclosure, there follows a description of a possible exhaust gas treatment apparatus of an engine that may be controlled by the method. As the skilled person would readily understand, the method of the disclosure is applicable to a wide range of exhaust gas treatment apparatus and is not limited to the specific example described below, which is provided simply for assisting the reader in understanding the context of the method of the disclosure.

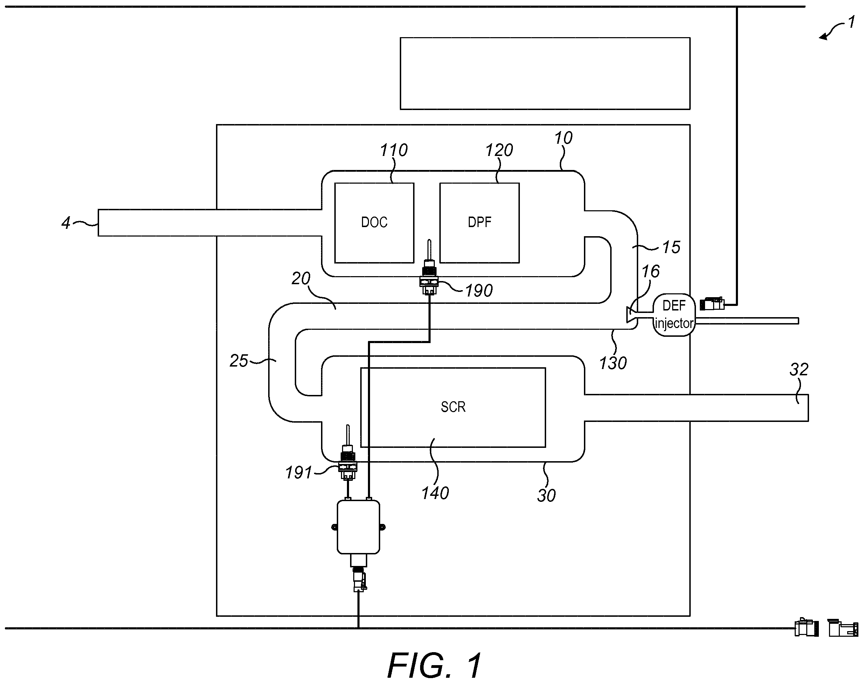

Figure 1 shows a schematic representation of an exhaust gas treatment apparatus 1 of an engine that may be controlled by the method of the disclosure. The exhaust gas treatment apparatus 1 may comprise a fluid flow path through which fluid may flow sequentially through various conduits, such as a first conduit 10, a first end coupling 15, a second conduit 20, a second end coupling 25, and a third conduit 30. The first, second and third conduits 10, 20, 30 may be substantially mutually parallel.

The fluid flow path may comprise, in series, a diesel oxidation catalyst (DOC) module 110, a diesel particulate filter (DPF) module 120, a mixer module 130, a selective catalytic reduction (SCR) module 140 and/or an ammonia oxidation catalyst (AMOX) module.

In use, fluid may be supplied to the exhaust gas treatment apparatus 1 via the inlet 4. Fluid may pass into the DOC module 110 in the first portion of the first conduit 10. Prior to receipt at the inlet 4, the temperature of exhaust may be sensed by a temperature sensor (not shown).

Temperature of exhaust gas within the DOC module 110 may be derived by a temperature sensor in the vicinity of the DOC module 110 (not shown). Alternatively, it may be inferred from temperatures obtained from one or more sensors that may be upstream and/or downstream of the DOC module 110. Alternatively, it may be inferred based on other sensed data in combination with one or more calculations and or the use of one or more data libraries. In the example exhaust gas treatment apparatus of Figure 1, for example, temperature sensors 190, 191 may be located downstream of the diesel oxidation catalyst module as well as upstream of the exhaust gas treatment apparatus (not shown). From data obtained from these sensors, temperature of gas within the diesel oxidation catalyst module may be inferred. In other embodiments, a single temperature sensor may be provided within the DOC module 110. Factors that may influence the presence, number and location of temperature sensors may include other control requirements of the engine and the exhaust gas treatment apparatus that fall outside the scope of this disclosure.

The DOC module 110 may comprise one or more catalysts, such as palladium or platinum. These materials serve as catalysts to cause oxidation of hydrocarbons ([HC]) and carbon monoxide (CO) present in the fluid flow in order to produce carbon dioxide (CO₂) and water (H₂O). The DOC module 110 may also serve to convert NO to NO₂ so as to achieve a NO:NO₂ ratio of 1:1. The catalysts may be distributed in a manner so as to maximise the surface area of catalyst material in order to increase effectiveness of the catalyst in catalysing reactions.

Fluid may flow from the DOC module 110 to the DPF module 120 which comprises features which are intended to restrict onward passage of carbon (C) in the form of soot. Carbon particles in the fluid may thus be trapped in the filter. The DPF module 120 may be regenerated through regeneration techniques. These techniques may involve controlling one or more of the temperature of the fluid, the pressure of the fluid and the proportion of unburnt fuel in the fluid at this point in the apparatus.

Exhaust gas may pass from the DPF module 120 into the first end coupling 15 where it flows past the emissions fluid injector module 16. The emissions fluid injector module 16 may be associated with or attachable to a pump electronic tank unit (PETU). The pump electronic tank unit may comprise a tank for providing a reservoir for emissions fluid to be injected by the emissions fluid injector module 16. Such emissions fluids may include urea or ammonia.

The PETU may further comprise a controller configured to control a volume of emissions fluid to be injected from the tank by the emissions fluid injector module 16. The controller may have as inputs, for example, temperature information and quantity of NOₓ information which may be derived from sensors in the SCR module 140.

Emissions fluid (e.g. urea, ammonia) may pass from the emissions fluid injector module 16 into the mixer module (not shown) located in the second conduit 20. The mixer module may comprise features for ensuring that the exhaust gas originating from the first conduit 10 is well mixed with the emissions fluid originating from the emissions fluid injector module 16, to create a mixed fluid.

The mixed fluid from the second conduit 20 may pass into the SCR module located in the first portion of the third conduit via the second end coupling 25. The SCR module 140 may comprise one or more catalysts through which the mixed fluid may flow. As the mixed fluid passes over the surfaces of the catalyst, a reaction may occur that converts the ammonia and NOₓ to diatomic nitrogen (N₂) and water (H₂O).

Fluid may pass from the SCR module 140 to the AMOX module (not shown in Figure 1) that may be located in the second (downstream) portion of the third conduit 30. The AMOX module may comprise an oxidation catalyst which may cause residual ammonia present in the fluid exiting the SCR module to react to produce nitrogen (N₂) and water (H₂O).

Fluid may pass from the AMOX module to the exhaust gas treatment apparatus outlet located at the second end 32 of the third conduit 30.

In addition to the exhaust gas treatment apparatus, the engine may comprise a combustion unit having an exhaust conduit and one or more combustion cylinders (not shown in Figure 1). Each of the one or more cylinders may comprise a piston, a fuel injector, an intake valve and an exhaust valve leading to the exhaust conduit. Fuel may be injected into the (or each) combustion cylinder via the fuel injector. The fuel injector may be configured to inject fuel in accordance with a controlled timing pattern.

The engine may also comprise an exhaust gas recirculation path between the exhaust conduit and upstream of the intake valve. The exhaust gas recirculation path may comprise an exhaust gas recirculation valve to open and close the exhaust gas recirculation path.

In order to increase a temperature of exhaust gas in the exhaust gas treatment apparatus, for example to facilitate a regeneration process, it is known to burn fuel in the DOC module 110 for the purpose of increasing exhaust gas temperature. While it is possible to inject fuel for this purpose directly into the DOC module 110, it is also possible to avoid the need for a separate injector by employing the fuel injector already present in the combustion cylinder(s) of the engine. This may involve injection of fuel for combustion in the DOC module 110 by injecting it into the combustion cylinder(s) of the engine at a time in the combustion cycle (e.g. during an exhaust stroke of the cylinder) when conditions are such that the fuel will pass directly through the cylinder without burning and therefore be available for combustion within the DOC module 110. Such injections may be termed subsidiary injections so as to distinguish them from main injections that are timed so as to combust in the cylinder and so drive the piston in a conventional manner.

When injecting fuel in a subsidiary injection, it may be necessary to close the exhaust gas recirculation valve in order (a) to avoid the fuel passing directly back into the cylinder which may cause sub-optimal performance due to its effect on air to fuel ratio and (b) to avoid that fuel being unavailable for its intended purpose of combustion within the DOC module 110.

A process intended to result in improved efficiency of the exhaust gas treatment apparatus (e.g. by removal of soot deposits from the DPF module) may be described as a regeneration process. Some regeneration processes may be NO₂-based regeneration processes. Other regeneration processes may be oxygen-based regeneration processes. An optimum temperature for a NO₂-based regeneration process may be different from (e.g. lower than) an optimum temperature for an oxygen-based regeneration process.

For each chemical reaction (e.g. each regeneration process) that is to take place in the exhaust gas treatment apparatus, there may be a desired minimum temperature. Moreover, each chemical reaction may have an optimum temperature at which the process rate may be optimum. Furthermore, above the optimum temperature it may be that a benefit to the rate of the chemical reaction of further increases in temperature may be increasingly limited.

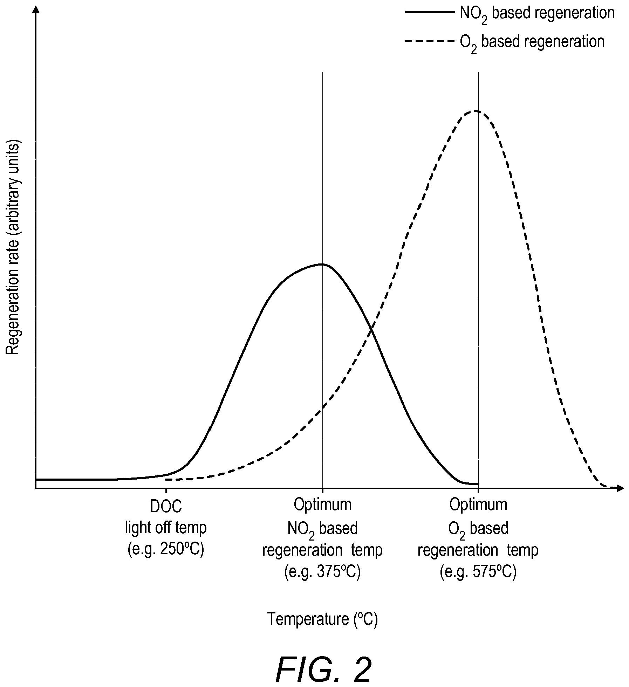

Figure 2 shows a graph representing regeneration rate versus temperature for NO₂-based regeneration and also for oxygen-based regeneration. As shown, it may be the case that the optimum rate for NO₂-based regeneration occurs at a lower temperature than the optimum rate for oxygen-based regeneration. Furthermore, it may be the case that, at temperatures below the respective optimum temperatures, the increase in rate for NO₂-based regeneration is greater than that for oxygen-based regeneration.

The method of the present disclosure may involve having a first mode and a second mode for injecting subsidiary injections of fuel. In both modes, the subsidiary injections may be in addition to main injections that are timed to combust in the cylinder for effecting movement of the piston. In this way, the fuel injected at subsidiary injections may be efficiently converted directly into heat of the exhaust gas.

The first mode may have as its objective a desire to increase temperature of exhaust gas in the exhaust gas treatment apparatus to a target temperature, T₁. The second mode may have as its objective a desire to increase temperature of exhaust gas in the exhaust gas treatment apparatus to a target temperature, T₂. T₁ may be a temperature required in order to reach or exceed an optimum temperature of oxygen-based regeneration. T₂ may be a temperature required in order to reach or exceed an optimum temperature of NO₂-based regeneration. T₁ may be greater than T₂. For example, and with reference to Figure 2, an optimum temperature for oxygen-based regeneration, T₁, may be 575 °C. Similarly, an optimum temperature for NO₂-based regeneration, T₂, may be 375 °C.

In the first mode, to achieve T₁, it may be necessary to inject a relatively larger quantity of fuel in the subsidiary injections over a period of perhaps 15 minutes, perhaps 30 minutes, perhaps 45 minutes, dependent upon a variety of variables including engine load and ambient conditions.

In order to comply with regulatory requirements, it may be necessary to have a minimum period in between the conclusion of a first period in the first mode and the commencement of a second period in the first mode. For example, the minimum period may be 80 hours, 100 hours, 120 hours or more.

In the second mode, to achieve T₂, it may be necessary to inject a relatively smaller quantity of fuel in the subsidiary injections over a shorter period, perhaps under 30 seconds or perhaps under 15 seconds.

In the first mode, it may be necessary for the exhaust gas recirculation valve always to be closed.

In the second mode, however, it may be possible for the exhaust gas recirculation valve to be open, at least intermittently.

For example, the second mode subsidiary injection events may take place during successive injection timing windows of the second mode during which the exhaust gas recirculation valve is closed. In addition, the second mode may also comprise exhaust gas recirculation timing windows. In this way, the second mode may allow for alternation between injection timing windows and exhaust gas recirculation timing windows. In the second mode, therefore, exhaust gas recirculation may not be always precluded.

In this way, the second mode may be less noticeable to a user of the internal combustion engine that the first mode. This is because, while the absence of exhaust gas recirculation in the first mode may be particularly noticeable, the intermittent absence of exhaust gas recirculation in the second mode may be less noticeable.

It may be particularly appropriate to use the second mode when, for example, at a time when oxygen-based regeneration is not deemed to be necessary but when NO₂-based regeneration is considered to be beneficial. It may also be particularly appropriate to use the second mode at a time when, for example, a minimum delay between first mode episodes has not been reached but regeneration is nevertheless considered to be beneficial.

Use of the first mode may be particularly appropriate in circumstances where both oxygen-based regeneration and NO₂-based regeneration is considered to be beneficial, or where only oxygen-based regeneration is considered to be beneficial.

It may be the case that the second mode can be configured to coordinate with regular engine running calibration such some or all of the injection timing windows coincide with engine running calibration periods that do not in any case require exhaust gas recirculation. In this way, the second mode may be calibrated in an opportunistic fashion to take advantage of periods when the exhaust gas recirculation valve would in any case be closed and coordinate these to coincide with the injection timing windows.

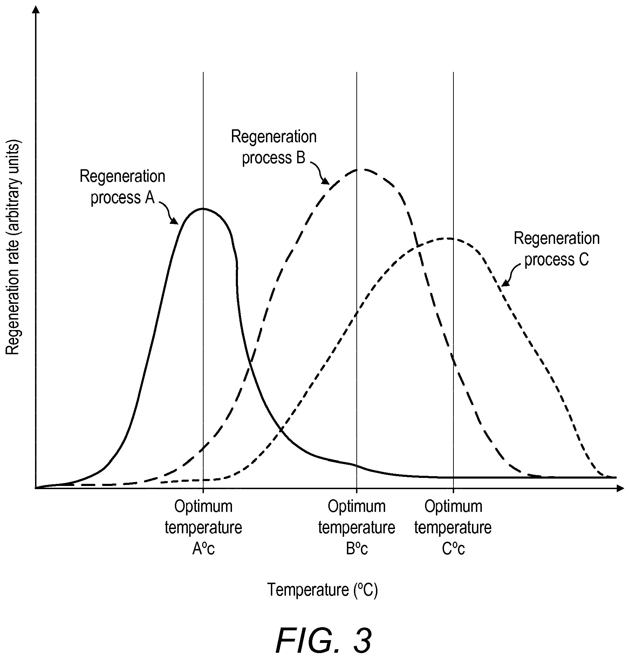

Figure 3 is provided to emphasise that the invention is not limited to only two different regeneration processes each having its own profile for regeneration rate versus temperature. There may be three such processes or, indeed, any number of such processes. Furthermore, it is provided to emphasise that the regeneration processes to which the method of the disclosure may by applied are not limited to the specific examples provided herein. Furthermore, it may be the case that the processes which have optimum temperatures for rate of the process may not be limited to regeneration processes. The method may be employed for targeting a plurality of temperatures for a whole range of objectives that may or may not be related to regeneration of the exhaust gas treatment apparatus.

The terms exhaust gas and exhaust fluid may be used interchangeably. The exhaust gas/fluid may include some liquid, especially solid particles such as particles of soot which, while in the solid phase, may be understood to be a constituent of exhaust gas/fluid.

### Industrial applicability

The method may be applicable to an internal combustion engine having an exhaust gas treatment apparatus that requires periodic regeneration, for example to remove deposits of soot and/or to remedy a build-up of urea deposits that may be observed as suboptimal NOₓ conversion. Different regeneration processes of the exhaust gas treatment apparatus may require different minimum and optimum temperatures. The method may enable an engine to exceed emission regulation requirements.

## Claims

1. A method of controlling operation of an engine, the engine comprising:
a combustion unit having an exhaust conduit (10, 20, 30) and one or more combustion cylinders each having a piston, a fuel injector, an intake valve and an exhaust valve leading to the exhaust conduit;
an exhaust gas recirculation path between the exhaust conduit and upstream of the intake valve, the exhaust gas recirculation path having an exhaust gas recirculation valve to open and close the exhaust gas recirculation path;
an exhaust gas treatment apparatus configured to receive fluid from the exhaust conduit and comprising a first module (110) and a second module (120) downstream of the first module;
the method comprising a first mode for increasing a temperature of exhaust gas in the exhaust gas treatment apparatus to a first temperature, T₁, and a second mode for increasing temperature of exhaust gas in the exhaust gas treatment apparatus to a second temperature, T₂, wherein T₁, > T₂;
the method comprising, in both the first and second modes, injecting fuel from the fuel injector into each of the one or more combustion cylinders in a main injection event to initiate a primary combustion event that drives the piston;
the first mode having a first mode duration, the first mode comprising: closing the exhaust gas recirculation valve; and periodically injecting fuel at a first rate of injection from the fuel injector into one of the one or more combustion cylinders in a first mode subsidiary injection event after the main injection event during a period in which the fuel injected in the first mode subsidiary injection event passes into the first module without combusting in the combustion unit for raising temperature of exhaust gas in the exhaust gas treatment apparatus by combustion therein, wherein a delay is invoked after execution of the first mode before a subsequent execution of the first mode, the delay having a delay duration of at least 50 times the first mode duration;
the second mode having a second mode duration shorter than the first mode duration, the second mode comprising: periodically injecting fuel at a second rate of injection, wherein the second rate of injection is lower than the first rate of injection, from the fuel injector into one of the one or more combustion cylinders in a second mode subsidiary injection event after the main injection event during a period in which the fuel injected in the second mode subsidiary injection event passes into the first module without combusting in the combustion unit for raising temperature of exhaust gas in the exhaust gas treatment apparatus by combustion therein;
the method comprising invoking the first mode when targeting the first temperature, T₁, and invoking the second mode when targeting the second temperature, T₂.

2. The method of claim 1 wherein the second mode comprises closing the exhaust gas recirculation valve.

3. The method of claim 1 or claim 2 wherein the second mode subsidiary injection events take place during successive injection timing windows during which the exhaust gas recirculation valve is closed, and wherein the second mode comprises alternating between injection timing windows and exhaust gas recirculation timing windows in which the exhaust gas recirculation valve is open.

4. The method of claim 3 wherein the engine further comprises a controller, the controller configured to receive an average desired rate of subsidiary injection and to calculate an increased rate of subsidiary injection to be injected only during the injection timing windows such that the average desired rate of subsidiary injection is maintained across a period comprising the injection timing windows and the exhaust gas recirculation timing windows.

5. The method of claim 3 or claim 4 a ratio of injection timing window duration to exhaust gas recirculation timing window duration is approximately 1:4.

6. The method of any preceding claim wherein the first temperature, T₁ is between 550 °C and 600 °C.

7. The method of any preceding claim wherein the second temperature, T₂, is between 350 °C and 400 °C.

8. The method of any preceding claim wherein the first mode duration ≥ 15 minutes, preferably ≥ 30 minutes, more preferably ≥ 45 minutes.

9. The method of any preceding claim wherein the delay duration ≥ 80 hours, preferably ≥ 100 hours, more preferably ≥ 120 hours.

10. The method of any preceding claim wherein the second mode duration ≤ 1 minute, preferably ≤ 30 seconds, more preferably ≤ 15 seconds.

11. The method of any preceding claim comprising combustion of the fuel injected in the subsidiary injection event in the upstream module of the exhaust gas treatment apparatus.

12. The method of any preceding claim wherein the upstream module of the exhaust gas treatment apparatus comprises a diesel oxidation catalyst.

13. The method of any preceding claim further comprising providing a temperature sensor in a vicinity of the diesel oxidation catalyst configured to provide the temperature data value indicative of the temperature of gas within the diesel oxidation catalyst module.

14. The method of any preceding claim wherein the delay duration is at least 60 times the first mode duration, optionally at least 70 times the first mode duration, optionally at least 80 times the first mode duration; optionally at least 90 times the first mode duration; and optionally at least 100 times the first mode duration.

15. An internal combustion engine comprising:
a combustion unit having an exhaust conduit (10, 20, 30) and one or more combustion cylinders each having a piston, a fuel injector, an intake valve and an exhaust valve leading to the exhaust conduit;
an exhaust gas recirculation path between the exhaust conduit and upstream of the intake valve, the exhaust gas recirculation path having an exhaust gas recirculation valve to open and close the exhaust gas recirculation path;
an exhaust gas treatment apparatus configured to receive fluid from the exhaust conduit and comprising an upstream module (110) and a downstream module (120)
a controller configured to execute the method of any preceding claim.

## Patentansprüche

1. Verfahren zur Regelung des Betriebs eines Motors, wobei der Motor umfasst:
eine Verbrennungseinheit, die eine Auslassleitung (10, 20, 30) und einen oder mehrere Verbrennungszylinder aufweist, die jeweils einen Kolben, eine Kraftstoffeinspritzdüse, ein Einlassventil und ein Auslassventil, das zur Auslassleitung führt, aufweisen;
einen Abgasrückführungsweg zwischen der Abgasleitung und stromaufwärts des Einlassventils, wobei der Abgasrückführungsweg ein Abgasrückführungsventil zum Öffnen und Schließen des Abgasrückführungswegs aufweist;
eine Abgasbehandlungseinrichtung, die konfiguriert ist, um Fluid aus der Abgasleitung zu empfangen und ein erstes Modul (110) und ein zweites Modul (120) stromabwärts des ersten Moduls umfasst;
wobei das Verfahren einen ersten Modus zur Erhöhung einer Temperatur des Abgases in der Abgasbehandlungseinrichtung auf eine erste Temperatur T₁ und einen zweiten Modus zur Erhöhung der Temperatur des Abgases in der Abgasbehandlungseinrichtung auf eine zweite Temperatur T₂ umfasst, wobei T₁ > T₂ liegt;
wobei das Verfahren sowohl im ersten als auch im zweiten Modus das Einspritzen von Kraftstoff aus der Kraftstoffeinspritzdüse in jeden der einen oder mehreren Verbrennungszylinder in einem Haupteinspritzvorgang umfasst, um einen primären Verbrennungsvorgang einzuleiten, der den Kolben antreibt;
wobei der erste Modus eine erste Modusdauer hat, wobei der erste Modus umfasst: Schließen des Abgasrückführungsventils; und periodisches Einspritzen von Kraftstoff mit einer ersten Einspritzrate aus der Kraftstoffeinspritzdüse in einen der einen oder mehreren Verbrennungszylinder in einem ersten Modus-Nebeneinspritzvorgang nach dem Haupteinspritzvorgang während eines Zeitraums, in dem der in dem ersten Modus-Nebeneinspritzvorgang eingespritzte Kraftstoff in das erste Modul übergeht, ohne in der Verbrennungseinheit zu verbrennen, um die Abgastemperatur in der Abgasbehandlungseinrichtung durch Verbrennung darin zu erhöhen, wobei eine Verzögerung nach Ausführung des ersten Modus vor einer nachfolgenden Ausführung des ersten Modus ausgelöst wird, wobei die Verzögerung eine Verzögerungsdauer von mindestens dem 50-fachen der Dauer des ersten Modus hat;
wobei der zweite Modus eine zweite Modusdauer hat, die kürzer als die Dauer des ersten Modus ist, wobei der zweite Modus umfasst: periodisches Einspritzen von Kraftstoff mit einer zweiten Einspritzrate, wobei die zweite Einspritzrate niedriger als die erste Einspritzrate ist, von der Kraftstoffeinspritzdüse in einen der einen oder mehreren Verbrennungszylinder in einem zweiten Modus-Nebeneinspritzvorgang nach dem Haupteinspritzvorgang während eines Zeitraums, in dem der in dem zweiten Modus-Nebeneinspritzvorgang eingespritzte Kraftstoff in das erste Modul übergeht, ohne in der Verbrennungseinheit zu verbrennen, um die Abgastemperatur in der Abgasbehandlungseinrichtung durch Verbrennung darin zu erhöhen;
wobei das Verfahren das Aufrufen des ersten Modus, wenn die erste Temperatur T₁ anvisiert, und das Aufrufen des zweiten Modus, wenn die zweite Temperatur T₂ anvisiert, umfasst.

2. Verfahren nach Anspruch 1, wobei der zweite Modus das Schließen des Abgasrückführungsventils umfasst.

3. Verfahren nach Anspruch 1 oder Anspruch 2, wobei die zweiten Modus-Nebeneinspritzvorgänge während aufeinanderfolgender Einspritzzeitfenster stattfinden, während denen das Abgasrückführungsventil geschlossen ist, und wobei der zweite Modus ein Wechseln zwischen Einspritzzeitfenstern und Abgasrückführungszeitfenstern umfasst, in denen das Abgasrückführungsventil geöffnet ist.

4. Verfahren nach Anspruch 3, wobei der Motor weiter einen Regler umfasst, wobei der Regler konfiguriert ist, um eine durchschnittliche gewünschte Nebeneinspritzrate zu empfangen und eine erhöhte Rate einer Nebeneinspritzung zu berechnen, die nur während der Einspritzzeitfenster einzuspritzen ist, sodass die durchschnittliche gewünschte Rate der Nebeneinspritzung über einen Zeitraum aufrechterhalten wird, der die Einspritzzeitfenster und die Abgasrückführungszeitfenster umfasst.

5. Verfahren nach Anspruch 3 oder 4, wobei das Verhältnis der Dauer des Einspritzzeitfensters zu der Dauer des Abgasrückführungszeitfensters ungefähr 1:4 beträgt.

6. Verfahren nach einem der vorstehenden Ansprüche, wobei die erste Temperatur T₁ zwischen 550 °C und 600 °C liegt.

7. Verfahren nach einem der vorstehenden Ansprüche, wobei die zweite Temperatur T₂ zwischen 350 °C und 400 °C liegt.

8. Verfahren nach einem der vorstehenden Ansprüche, wobei die Dauer des ersten Modus ≥ 15 Minuten, vorzugsweise ≥ 30 Minuten, bevorzugter ≥ 45 Minuten beträgt.

9. Verfahren nach einem der vorstehenden Ansprüche, wobei die Verzögerungsdauer ≥ 80 Stunden, vorzugsweise ≥ 100 Stunden, bevorzugter ≥ 120 Stunden beträgt.

10. Verfahren nach einem der vorstehenden Ansprüche, wobei die Dauer des zweiten Modus ≤ 1 Minute, vorzugsweise ≤ 30 Sekunden, bevorzugter ≤ 15 Sekunden beträgt.

11. Verfahren nach einem der vorstehenden Ansprüche, umfassend die Verbrennung des bei dem Neben-Einspritzvorgang eingespritzten Kraftstoffs im stromaufwärtigen Modul der Abgasbehandlungseinrichtung.

12. Verfahren nach einem der vorstehenden Ansprüche, wobei das stromaufwärtige Modul der Abgasbehandlungseinrichtung einen Dieseloxidationskatalysator umfasst.

13. Verfahren nach einem der vorstehenden Ansprüche, weiter umfassend das Bereitstellen eines Temperatursensors in einer Nähe des Dieseloxidationskatalysators, der konfiguriert ist, um den Temperaturdatenwert bereitzustellen, der die Temperatur des Gases innerhalb des Dieseloxidationskatalysatormoduls anzeigt.

14. Verfahren nach einem der vorstehenden Ansprüche, wobei die Verzögerungsdauer mindestens das 60-fache der Dauer des ersten Modus beträgt, optional mindestens das 70-fache der Dauer des ersten Modus beträgt, optional mindestens das 80-fache der Dauer des ersten Modus beträgt; optional mindestens das 90-fache der Dauer des ersten Modus beträgt; und optional mindestens das 100-fache der Dauer des ersten Modus beträgt.

15. Verbrennungsmotor, umfassend:
eine Verbrennungseinheit, die eine Auslassleitung (10, 20, 30) und einen oder mehrere Verbrennungszylinder aufweist, die jeweils einen Kolben, eine Kraftstoffeinspritzdüse, ein Einlassventil und ein Auslassventil aufweisen, das zur Auslassleitung führt;
einen Abgasrückführungsweg zwischen der Abgasleitung und stromaufwärts des Einlassventils, wobei der Abgasrückführungsweg ein Abgasrückführungsventil zum Öffnen und Schließen des Abgasrückführungswegs aufweist;
eine Abgasbehandlungseinrichtung, die konfiguriert ist, um Fluid aus der Abgasleitung zu empfangen und ein stromaufwärtiges Modul (110) und ein stromabwärtiges Modul (120) umfasst,
einen Regler, der konfiguriert ist, um das Verfahren nach einem der vorstehenden Ansprüche durchzuführen.

## Revendications

1. Procédé de commande de fonctionnement d'un moteur, le moteur comprenant :
une unité de combustion comportant un conduit d'échappement (10, 20, 30) et un ou plusieurs cylindres de combustion comportant chacun un piston, un injecteur de carburant, une soupape d'admission et une soupape d'échappement menant au conduit d'échappement ;
un trajet de recirculation de gaz d'échappement entre le conduit d'échappement et en amont de la soupape d'admission, le trajet de recirculation de gaz d'échappement ayant une soupape de recirculation de gaz d'échappement pour ouvrir et fermer le trajet de recirculation de gaz d'échappement ;
un appareil de traitement de gaz d'échappement configuré pour recevoir un fluide depuis le conduit d'échappement et comprenant un premier module (110) et un second module (120) en aval du premier module ;
le procédé comprenant un premier mode pour augmenter une température de gaz d'échappement dans l'appareil de traitement de gaz d'échappement jusqu'à une première température, T₁, et un second mode pour augmenter une température de gaz d'échappement dans l'appareil de traitement de gaz d'échappement jusqu'à une seconde température, T₂, dans lequel T₁>T₂ ;
le procédé comprenant, dans les premier et second modes, l'injection de carburant depuis l'injecteur de carburant dans chacun des un ou plusieurs cylindres de combustion lors d'un événement d'injection principal afin d'initier un événement de combustion primaire qui entraîne le piston ;
le premier mode ayant une durée de premier mode, le premier mode comprenant : la fermeture de la soupape de recirculation de gaz d'échappement; et l'injection périodique du carburant à une première vitesse d'injection depuis l'injecteur de carburant dans l'un des un ou plusieurs cylindres de combustion lors d'un événement d'injection subsidiaire de premier mode après l'événement d'injection principale pendant une période au cours de laquelle le carburant injecté dans l'événement d'injection subsidiaire de premier mode passe dans le premier module sans combustion dans l'unité de combustion pour élever la température de gaz d'échappement dans l'appareil de traitement de gaz d'échappement par combustion dans celui-ci, un retard étant invoqué après l'exécution du premier mode avant une exécution ultérieure du premier mode, le retard ayant une durée de retard d'au moins 50 fois la durée de premier mode;
le second mode ayant une durée de second mode plus courte que la durée de premier mode, le second mode comprenant : l'injection périodique de carburant à une seconde vitesse d'injection, la seconde vitesse d'injection étant inférieure à la première vitesse d'injection, depuis l'injecteur de carburant dans l'un des un ou plusieurs cylindres de combustion lors d'un événement d'injection subsidiaire de second mode après l'événement d'injection principale pendant une période au cours de laquelle le carburant injecté lors de l'événement d'injection subsidiaire de second mode passe dans le premier module sans combustion dans l'unité de combustion pour élever une température de gaz d'échappement dans l'appareil de traitement de gaz d'échappement par combustion dans celui-ci ;
le procédé comprenant d'invoquer le premier mode lorsque la première température, T₁, est ciblée et d'invoquer le second mode lorsque la seconde température, T₂, est ciblée.

2. Procédé selon la revendication 1, dans lequel le second mode comprend la fermeture de la soupape de recirculation de gaz d'échappement.

3. Procédé selon la revendication 1 ou la revendication 2, dans lequel les événements d'injection subsidiaire de second mode ont lieu pendant des fenêtres de cadencement d'injection successives pendant lesquelles la soupape de recirculation de gaz d'échappement est fermée, et dans lequel le second mode comprend d'alterner entre des fenêtres de cadencement d'injection et de fenêtres de cadencement de recirculation de gaz d'échappement dans lesquelles la soupape de recirculation de gaz d'échappement est ouverte.

4. Procédé selon la revendication 3, dans lequel le moteur comprend en outre un dispositif de commande, le dispositif de commande étant configuré pour recevoir une vitesse souhaitée moyenne d'injection subsidiaire et pour calculer une vitesse accrue d'injection secondaire subsidiaire à injecter uniquement pendant les fenêtres de cadencement d'injection de sorte que la vitesse moyenne souhaitée d'injection subsidiaire est maintenue sur une période comprenant les fenêtres de cadencement d'injection et les fenêtres de cadencement de recirculation de gaz d'échappement.

5. Procédé selon la revendication 3 ou 4, dans lequel un rapport entre une durée de fenêtre de cadencement d'injection et une durée de fenêtre de cadencement de recirculation de gaz d'échappement est d'environ 1:4.

6. Procédé selon l'une quelconque des revendications précédentes dans lequel la première température, T₁, est comprise entre 550 °C et 600 °C.

7. Procédé selon l'une quelconque des revendications précédentes, dans lequel la seconde température, T₂, est comprise entre 350 °C et 400 °C.

8. Procédé selon l'une quelconque des revendications précédentes, dans lequel la durée de premier mode ≥ 15 minutes, de préférence ≥ 30 minutes, plus préférablement ≥ 45 minutes.

9. Procédé selon l'une quelconque des revendications précédentes, dans lequel la durée de retard ≥ 80 heures, de préférence ≥ 100 heures, plus préférablement ≥ 120 heures.

10. Procédé selon l'une quelconque des revendications précédentes, dans lequel la durée de second mode ≤ 1 minute, de préférence ≤ 30 secondes, plus préférablement ≤ 15 secondes.

11. Procédé selon l'une quelconque des revendications précédentes, comprenant la combustion du carburant injecté lors de l'événement d'injection subsidiaire dans le module en amont de l'appareil de traitement de gaz d'échappement.

12. Procédé selon l'une quelconque des revendications précédentes, dans lequel le module en amont de l'appareil de traitement de gaz d'échappement comprend un catalyseur d'oxydation pour diesel.

13. Procédé selon l'une quelconque des revendications précédentes, comprenant en outre la fourniture d'un capteur de température à proximité du catalyseur d'oxydation pour diesel configuré pour fournir la valeur de données de température indicative de la température de gaz dans le module de catalyseur d'oxydation pour diesel.

14. Procédé selon l'une quelconque des revendications précédentes, dans lequel la durée de retard est d'au moins 60 fois la durée de premier mode, de manière facultative d'au moins 70 fois la durée de premier mode, de manière facultative d'au moins 80 fois la durée de premier mode; de manière facultative d'au moins 90 fois la durée de premier mode ; et de manière facultative d'au moins 100 fois la durée de premier mode.

15. Moteur à combustion interne comprenant :
une unité de combustion comportant un conduit d'échappement (10, 20, 30) et un ou plusieurs cylindres de combustion comportant chacun un piston, un injecteur de carburant, une soupape d'admission et une soupape d'échappement menant au conduit d'échappement ;
un trajet de recirculation de gaz d'échappement entre le conduit d'échappement et en amont de la soupape d'admission, le trajet de recirculation de gaz d'échappement ayant une soupape de recirculation de gaz d'échappement pour ouvrir et fermer le trajet de recirculation de gaz d'échappement ;
un appareil de traitement de gaz d'échappement configuré pour recevoir un fluide provenant du conduit d'échappement et comprenant un module amont (110) et un module aval (120),
un dispositif de commande configuré pour exécuter le procédé selon l'une quelconque des revendications précédentes.
